# EUROPÄISCHE PATENTANMELDUNG

(11) **EP 0 989 487 A1**
(43) Veröffentlichungstag der Anmeldung: **29.03.2000**
(21) Anmeldenummer: 99114719.0
(22) Anmeldetag: 28.07.1999
(51) Int. Cl.: G06F 9/44

(54) **Verfahren zum Abarbeiten mehrerer Anweisungen zum Betrieb eines Computers**

(30) Priorität: 22.09.1998 DE 19843351
(71) Anmelder: ROBERT BOSCH GMBH, 70442 Stuttgart (DE)
(72) Erfinder: Schmidt, Ralf, 55128 Mainz (DE)

(57) **Zusammenfassung**

Die Erfindung betrifft ein Verfahren zum Abarbeiten mehrerer Anweisungen (3) zum Betrieb eines Rechners, insbesondere eines Personal Computers (PC). Um ein solches Verfahren zu schaffen, das durch zusätzliche Module in seiner Funktion problemlos erweiterbar ist, schlägt die Erfindung vor, dass in einem Container (1) auf dem Rechner mehrere Dokumente (2), die die Anweisungen (3) enthalten, betrieben werden, wobei die Dokumente (2) jeweils eine eigene Adresse (4) haben, die Dokumente (2) Informationen (5) über das Zusammenwirken der Dokumente (2) untereinander aufweisen und lediglich aufgrund dieser Informationen (5) von einem Dokument (2) zu einem anderen Dokument (2) verzweigt werden kann.

## Beschreibung

Die vorliegende Erfindung betrifft ein Verfahren zum Abarbeiten mehrerer Anweisungen zum Betrieb eines Rechners, insbesondere eines Personal Computers (PC).

Der Betrieb des Rechners betrifft bspw. das Abarbeiten von Service-Aktionen zum Programmieren oder Verwalten einer Telekommunikationsanlage (TK-Anlage).

### Stand der Technik

Aus dem Stand der Technik sind Verfahren bekannt, die einen Container, bspw. einen Browser, zur Verfügung stellen, in den besondere containerfähige Dokumente geladen werden können. Diese Dokumente umfassen entweder nur Text und Bilder, bspw. Seiten im Hyper-Text-Markup-Language (HTML)-Standard, oder aber auch Verzweigungen zu anderen Dokumenten. Zwischen den einzelnen Dokumenten kann nahezu beliebig hin- und hergewechselt werden. Die Dokumente können von den Containern der bekannten Verfahren beliebig ausgewählt und aufgerufen werden werden. Der Wechsel von einem Dokument zu einem anderen Dokument unterliegt demnach keiner Beschränkung.

Die Container der bekannten Verfahren werden bspw. als zugang zum Internet oder zum Lesen von Dokumenten, bspw. von Handbüchern, eingesetzt. Dabei ist das freizügige Wechseln zwischen den Dokumenten, bspw. zwischen den Seiten im Internet oder zwischen den Kapiteln von Handbüchern, durchaus erwünscht. Der bestimmungsgemäße Einsatz dieser aus dem Stand der Technik bekannten Verfahren setzt diese Freizügigkeit sogar zwingend voraus.

Aufgrund dieser Möglichkeit des freizügigen Hin- und Herwechselns zwischen den Dokumenten werden die bekannten Verfahren nicht zum Betrieb eines Rechners eingesetzt, da ein kontrollierter Verfahrensablauf nicht gewährleistet werden kann.

Nach dem Stand der Technik werden deshalb zum Betrieb des Rechners andersartige Verfahren eingesetzt, die aus einer Vielzahl von Modulen aufgebaut sind. Jedes Modul erfüllt eine bestimmte Funktion oder ein komplexes Leistungsmerkmal des gesamten Verfahrens. Bevor das Verfahren angewendet werden kann, werden die einzelnen Module zu einer integralen Einheit zusammengefügt, bspw. durch Linken.

Das hat den Nachteil, daß das bekannte Verfahren nicht einfach um weitere Funktionen oder Leistungsmerkmale ergänzt werden kann. Vielmehr muß ein neue Modul mit einer neuen Funktion oder einem zusätzlichen Leisungsmerkmal zusammen mit den anderen Modulen zu einer neuen integralen Einheit zusammengefügt werden. Dazu müssen sämtliche Module compiliert, gelinkt und dann das gesamte Verfahren mit dem neuen Modul getestet, und schließlich das gesamte Verfahren an die Anwender ausgeliefert werden.

Es ist demnach die Aufgabe der vorliegenden Erfindung, ein Verfahren der eingangs genannten Art zu schaffen, das die vorgenannten Nachteile vermeidet und das insbesondere durch zusätzliche Module in seiner Funktion problemlos erweitert werden kann.

Zur Lösung dieser Aufgabe schlägt die Erfindung ausgehend von dem Verfahren der eingangs genannten Art vor, daß in einem Container auf dem Rechner mehrere Dokumente, die die Anweisungen enthalten, betrieben werden, wobei die Dokumente jeweils eine eigene Adresse haben, die Dokumente Informationen über das Zusammenwirken der Dokumente untereinander aufweisen, und lediglich aufgrund dieser Informationen von einem Dokument zu einem anderen Dokument gewechselt werden kann.

Jeweils ein oder mehrere Dokumente erfüllen eine bestimmte Funktion oder ein bestimmtes Leistungsmerkmal des gesamten erfindungsgemäßen Verfahrens. Die Funktion oder das Leistungsmerkmal ist durch die Anweisungen in den Dokumenten festgelegt. Zum Betrieb des Verfahrens müssen die einzelnen Dokumente nicht erst zu einer integralen Einheit zusammengefügt werden. Vielmehr bleiben die Dokumente als eigenständige Module des Verfahrens auch während des Betriebs erhalten.

Die logischen Verknüpfungen der einzelnen Dokumente untereinander erfolgen mittels des Containers, der mit den einzelnen Dokumenten kommuniziert und den Ablauf der einzelnen Funktionen und Leistungsmerkmale so steuert, daß sich das erfindungsgemäße Verfahren ergibt. zur Steuerung des Ablaufs des Verfahrens verwendet der Container die Informationen über das Zusammenwirken der Daten untereinander. Der Container lädt die einzelnen Dokumente über die Angabe ihrer Adresse und führt die Anweisungen in den Dokumenten aus. Ein freizügiges Hin- und Herwechseln zwischen den Dokumenten ist bei dem erfindungsgemäßen Verfahren nicht möglich. Durch eine besondere Ausbildung des Containers ist diese Freizügigkeit eingeschränkt. Dadurch kann zusammen mit den Informationen in den Dokumenten über das Zusammenwirken der Dokumente untereinander ein kontrollierter Ablauf des erfindungsgemäßen Verfahrens sichergestellt werden.

Zur Kommunikation zwischen Dokumenten und Container kann grundsätzlich jedes beliebige Kommunikationsprotokoll verwendet werden.

Erfindungsgemäß ist erkannt worden, daß ein Verfahren zum Betrieb eines Rechners dann problemlos durch zusätzliche Module in seiner Funktion erweitert werden kann, wenn das Verfahren aus mehreren Modulen, den Dokumenten besteht, und wenn die einzelnen Dokumente zum Betrieb des Verfahrens nicht erst zu einer integralen Einheit zusammengefügt werden müssen, sondern während des Betriebs des Verfahrens als eigenständige Module bestehen bleiben können.

Das erfindungsgemäße Verfahren ist in vorteilhafter Weise in eine Vielzahl von Funktionen und Leistungsmerkmalen unterteilt, die in den Dokumenten realisiert sind. Diese verhältnismäßig kleinen Dokumente können wesentlich leichter gewartet und gehandhabt werden, als eine oder mehrere große Dateien, in die jeweils eine Vielzahl von Funktionen und Leistungsmerkmale integriert sind. Voraussetzung für ein zuverlässiges Zusammenwirken der einzelnen Funktionen und Leistungsmerkmale der Dokumente ist, daß die Dokumente Informationen über das Zusammenwirken der Dokumente untereinander aufweisen. Diese Informationen bestehen beispielsweise aus Schnittstellendefinitionen zwischen den Dokumenten.

Des weiteren hat das erfindungsgemäße Verfahren den Vorteil, daß es auf einfache Weise durch zusätzliche Funktionen oder Leistungsmerkmale ergänzt werden kann, indem zusätzliche Dokumente, die diese zusätzlichen Funktionen oder diese zusätzlichen Leistungsmerkmale aufweisen, zu dem Container hinzugefügt werden. Lediglich diejenigen alten Dokumente, die auf diese neuen Dokumente zugreifen und die neuen Funktionen und Leistungsmerkmale nutzen wollen, müssen entsprechend geändert bzw. ergänzt werden. Sind die neuen Dokumente zu dem Container hinzugefügt und sind die entsprechenden alten Dokumente angepaßt worden, können die neue Funktionen und Leistungsmerkmale von dem Verfahren genutzt werden. Ein zeitaufwendiges Zusammenfügen der einzelnen unveränderten alten Dokumente mit den neuen oder den angepaßten Dokumenten vor dem Betrieb des Verfahrens kann somit entfallen.

Vorteilhafterweise sind mehrere Dokumente zu mindestens einer physikalischen Linkeinheit zusammengefaßt, wobei die Dokumente jeweils einer Linkeinheit Informationen über das Zusammenwirken der Dokumente dieser Linkeinheit untereinander aufweisen. Jede Linkeinheit erfüllt einen bestimmten Funktionsumfang oder ein komplexes Leistungsmerkmal des gesamten erfindungsgemäßen Verfahrens. Die Informationen über das Zusammenwirken der Dokumente einer Linkeinheit untereinander bestehen aus der Angabe der logischen Verknüpfungen der Dokumente. Durch die Angabe einer oder mehrerer möglicher logischer Verknüpfungen in einem Dokument kann der Ablauf des Verfahrens, d. h. die Verzweigung von diesem Dokument zu weiteren Dokumenten innerhalb derselben Linkeinheit gesteuert werden. Anders ausgedrückt wird dadurch nach dem Ausführen einer ersten Funktion die Ausführung einer oder mehrerer bestimmter zweiter Funktionen festgelegt.

Vorzugsweise ist der Container als Browser ausgebildet, und die Dokumente sind browserfähig.

Gemäß einer besonders vorteilhaften Weiterbildung der Erfindung erfolgt die Kommunikation zwischen den Dokumenten und dem Container nach einem Component-Object-Model (COM)-Standard. Das hat den Vorteil, daß für die Dokumente eine wahlfreie COM-fähige Programmiersprache, bspw. Visual Basic, C++ oder Java, verwendet werden kann. Auf diese Weise kann das erfindungsgemäße Verfahren aus Dokumenten zusammengesetzt werden, die in unterschiedlichen COM-fähigen Programmiersprachen programmiert sind.

In der Praxis besonders bewährt hat sich eine Kommunikation zwischen den Dokumenten und dem Container insbesondere nach dem Hyper-Text-Markup-Language (HTML)-Standard. Die Dokumente liegen vorzugsweise als Seiten in einem Hyper-Text-Markup-Language (HTML)-Format vor.

Vorteilhafterweise liegen die Dokumente als Seiten in einem ActiveX-Format vor. ActiveX ist die Bezeichnung der Firma Microsoft für COM-basierte, internetfähige Seiten. ActiveX-Seiten sind aktive HTML-Seiten, im Gegensatz zu den rein text- bzw. bildorientierten HTML-Seiten.

Gemäß einer vorteilhaften Weiterbildung der Erfindung wird vorgeschlagen, daß innerhalb einer Linkeinheit gemäß den in den Dokumenten enthaltenen Informationen über das Zusammenwirken der Dokumente untereinander von einem Dokument zu einem anderen Dokument verzweigt werden kann. In einem solchen Fall betreffen die Informationen Angaben über logische Verknüpfungen zwischen den Dokumenten einer Linkeinheit. Auf diese Weise wird ein gezieltes Zusammenwirken der einzelnen Funktionsmerkmale der Dokumente zu einem bestimmten Funktionsumfang oder zu einem bestimmten komplexen Leistungsmerkmal ermöglicht. Lediglich die Dokumente einer Linkeinheit werden vor dem Betrieb des erfindungsgemäßen Verfahrens zu einer Linkeinheit zusammengefügt. Zum Ergänzen zusätzlicher Funktionen müssen also nur die Dokumente derjenigen Linkeinheit neu zusammengefügt werden, in denen neue Dokumente hinzugefügt oder alte Dokumente angepaßte wurden. Alle anderen Linkeinheiten bleiben von der Ergänzung des Verfahrens unberührt.

Vorteilhafterweise werden mehrere Container in einem gemeinsamen Applikationsrahmen als Multiple-Document-Interface (MDI) betrieben. Vorzugsweise sind die Container in den Applikationsrahmen integriert. Die Container können bspw. in den Applikationsrahmen zu ausführbaren .DLL- oder .EXE-Dateien gelinkt werden. Das ist ohne weiteres möglich, ohne daß dadurch die Flexibilität und die einfache Erweiterbarkeit des erfindungsgemäßen Verfahrens beeinträchtigt wird. Die Erweiterung des Verfahrens betrifft nämlich, wie oben bereits ausgeführt, lediglich die neuen Dokumente und die entsprechend angepaßten alten Dokumente. Eine Anpassung der Container selbst oder gar des Applikationsrahmens ist in der Regel nicht notwendig.

Gemäß einer besonders vorteilhaften Weiterbildung des erfindungsgemäßen Verfahrens wird vorgeschlagen, daß das Verfahren zur Programmierung und zur Verwaltung einer Telekommunikationsanlage (TK-Anlage) eingesetzt wird. Die hohe Flexibilität des erfindungsgemäßen Verfahrens bezüglich der Erweiterung und Ergänzung des Funktions- und Leistungsumfangs kommt insbesondere bei einem derartigen Einsatz des Verfahrens zum Tragen. Je nach Leistungsumfang einer verkauften TK-Anlage bzw. je nach Zielgruppe muß das mit ausgelieferte Verfahren zum Programmieren und Verwalten der TK-Anlage einen entsprechend angepaßten Leistungsumfang aufweisen. Aus einem Repertoire von Dokumenten und Linkeinheiten mit bestimmten Funktionen und komplexen Leistungsmerkmalen werden die gewünschten herausgegriffen und zu dem erfindungsgemäßen Verfahren zusammengestellt. Dadurch kann das Verfahren auf einfache Weise dem gewünschten Funktions- und Leistungsumfang angepaßt werden. Die hohe Flexibilität hat auch bei einer entsprechenden Anpassung des Verfahrens zum Programmieren oder Verwalten der TK-Anlage aufgrund einer nachträglichen Erweiterung der TK-Anlage bzw. einer Änderung der Zielgruppe erhebliche Vorteile.

Die Linkeinheiten sind vorteilhafterweise in einem Computer-Netzwerk auf verschiedenen Computern unter einer bestimmten Adresse abgelegt sind. Ebenso können die Dokumente in einem Computer-Netzwerk auf verschiedenen Computern unter einer bestimmten Adresse abgelegt sein, wobei die Container zum Abarbeiten der Anweisungen in diesen Dokumenten über das Computer-Netzwerk auf die Dokumente zugreifen.

Die Dokumente sind vorzugsweise in einem Intranet und/oder im Internet auf verschiedenen Computern unter einer bestimmten Adresse abgelegt, und die Container greifen zum Abarbeiten der Anweisungen in diesen Dokumenten über das Intranet bzw. das Internet auf die Dokumente zu. Bei einem zugriff auf die Dokumente über das Internet erfolgt die Kommunikation zwischen den Dokumenten und den Containern vorzugsweise nach einem Hyper-Text-Transfer-Protocol (HTTP)-Standard.

Nachfolgend wird eine bevorzugte Ausführungsform der Erfindung anhand von Zeichnungen näher erläutert. Es zeigen:
- Fig. 1: eine schematische Darstellung eines erfindungsgemäßen Verfahrens zum Betrieb eines Rechners;
- Fig. 2: eine hierarchische Struktur des erfindungsgemäßen Verfahrens gemäß Fig. 1; und
- Fig. 3: eine Anzeige einer Benutzeroberfläche auf einem Monitor des Rechners von Fig. 1.

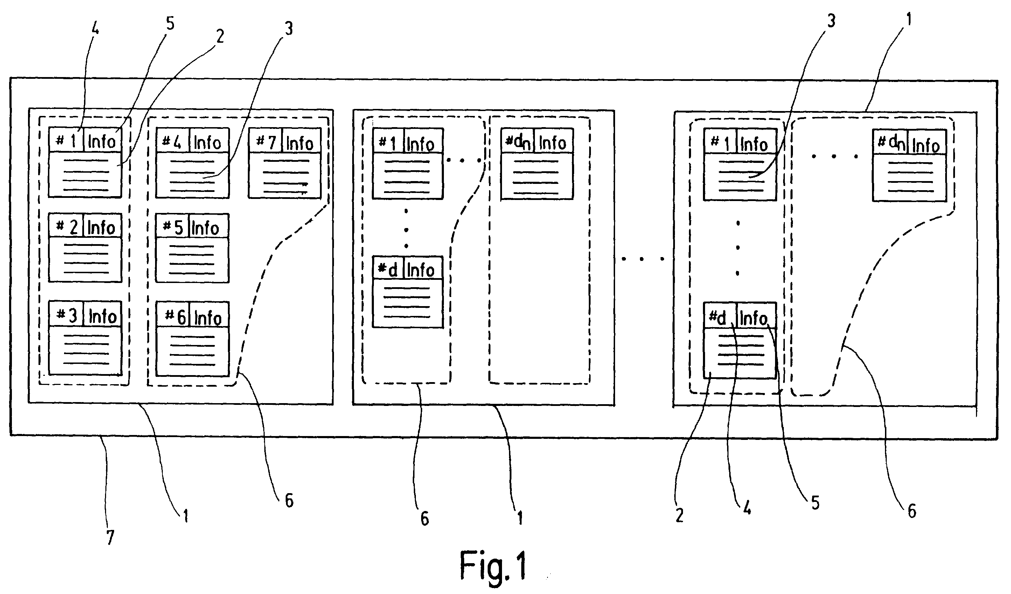

In Fig. 1 ist ein erfindungsgemäßes Verfahren zum Abarbeiten mehrerer Anweisungen zum Betrieb eines Rechners schematisch dargestellt. In einem als Browser ausgebildeten Container 1 auf dem Rechner werden mehrere Dokumente 2 betrieben, die die Anweisungen 3 enthalten. In der vorliegenden Ausführungsform betrifft der Betrieb des Rechners das Abarbeiten von Service-Aktionen zum Programmieren und Verwalten einer Telekommunikationsanlage (TK-Anlage). Jeweils eines oder mehrere der Dokumente 2 erfüllen eine bestimmte Funktion oder ein bestimmtes komplexes Leistungsmerkmal des Verfahrens. Die Dokumente 2 haben jeweils eine eigene Adresse 4. Mehrere Dokumente 2 eines Containers 1 sind zu physikalischen Linkeinheiten 6 zusammengefasst. Die Dokumente 2 jeweils einer Linkeinheit 6 enthalten Informationen 5 über das Zusammenwirken der Dokumente 2 dieser Linkeinheit 6 untereinander. Die Informationen 5 der Dokumente 2 betreffen im Wesentlichen die logischen Verknüpfungen von einem bestimmten Dokument 2 zu den übrigen Dokumente 2 einer Linkeinheit 6. Innerhalb einer Linkeinheit 6 wird gemäß den in den Dokumenten 2 enthaltenen Informationen 5 von einem Dokument 2 zu einem anderen Dokument 2 verzweigt. Ein freizügiges Hin- und Herwechseln zwischen den Dokumenten 2 durch gezielte Auswahl der Adresse 4 eines Dokuments 2 über den Container 1 ist bei dem erfindungsgemäßen Verfahren nicht möglich. Durch diese besondere Ausbildung des Containers 1 kann ein kontrollierter Ablauf des Verfahrens sichergestellt werden. Ein Anwender kann zur Programmierung oder Verwaltung der TK-Anlage nur insoweit von einem Dokument 2 zu einem anderen Dokument 2 wechseln, wie dies gemäß den Informationen 5 in den Dokumenten 2 auch vorgesehen ist.

In einem Applikationsrahmen 7 sind mehrere dieser Container 1 vorgesehen. Der Applikationsrahmen 7 bildet dabei ein Multiple-Document-Interface (MDI). Die Container 1 sind vorzugsweise in den Applikationsrahmen 7 integriert, indem die Container 1 beispielsweise zu ausführbaren .DLL oder .EXE-Dateien in den Applikationsrahmen 7 gelinkt werden.

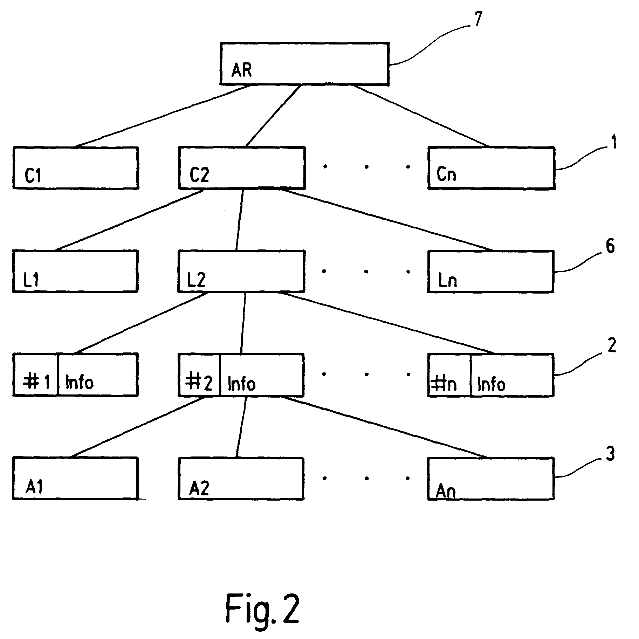

In Fig. 2 ist die hierarchische Struktur des erfindungsgemäßen Verfahrens aus Fig. 1 dargestellt. Die Kommunikation zwischen den Dokumenten 2 und dem Container 1 erfolgt nach einem Component-Objekt-Model (COM)-Standard. Einen solchen Standard stellt beispielsweise der Dynamic-Hyper-Text-Markup-Language (DHTML)-Standard dar. Für eine Kommunikation nach dem DHTML-Standard liegen die Dokumente 2 als Seiten in dem DHTML-Format vor. Es können die Dokumente 2 auch in einem Active X-Format vorliegen. Active X ist die Bezeichnung der Fa. Microsoft für COM-basierte aktive HTML-Seiten.

Die Dokumente 2 oder die Linkeinheiten 6 können in einem Rechner-Netzwerk auf verschiedenen Rechnern unter einem bestimmten Dateinamen abgelegt sein. Zum Abarbeiten der Anweisungen 3 in diesen Dokumenten 2 greift der Container 1 über das Rechner-Netzwerk auf die Dokumente 2 oder die Linkeinheiten 6 zu. Das Rechner-Netzwerk kann als ein firmeninternes Intranet oder als das weltumspannende Internet ausgebildet sein.

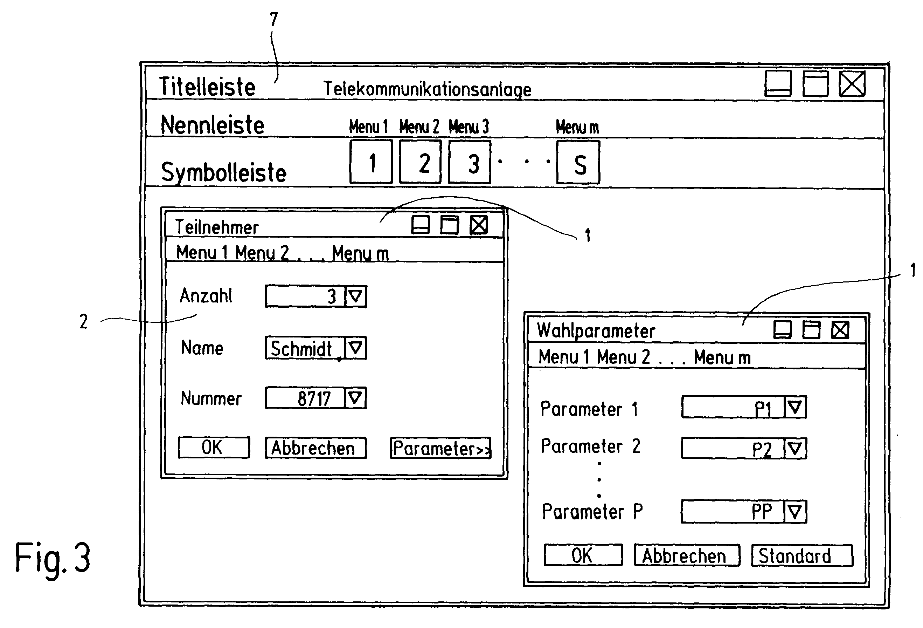

In Fig. 3 ist eine Anzeige einer Benutzeroberfläche auf einem Monitor des Rechners dargestellt, der mittels des erfindungsgemäßen Verfahrens betrieben wird, für die die übereinstimmenden Elemente oder die gleichen Bezugszeichen wie in Fig. 1 und 2 benutzt. In dem gemeinsamen Applikationsrahmen 7 werden zwei Container 1 betrieben. Der Container 1 links auf der Benutzeroberfläche erfüllt die Funktion, die Teilnehmerangaben einer TK-Anlage zu programmieren. Die in dem linken Container 1 dargestellte Seite zum Programmieren der Anzahl der Teilnehmer, der Namen der Teilnehmer und der Nebenstellennummer der Teilnehmer ist eine Funktion, wie sie beispielsweise durch ein Dokument 2 oder durch eine Linkeinheit 6 mit mehreren darin enthaltenen Dokumenten 2 zur Verfügung gestellt wird. Durch Betätigen der Tasten [OK], [ABBRECHEN] oder [〈PARAMETER〉] kann zu anderen Dokumenten 2 innerhalb derselben Linkeinheit 6 gewechselt werden. Über diese Tasten kann von dem dargestellten Dokument 2 nur zu denjenigen Dokumenten 2 gewechselt werden, zu denen die logischen Verknüpfungen als Informationen 5 in dem dargestellten Dokument 2 abgelegt sind. Ein gezieltes Wechseln zu bestimmten Dokumenten 2 durch den Anwender über den Container 7 ist bei dem erfindungsgemäßen Verfahren nicht möglich.

## Patentansprüche

1. Verfahren zum Abarbeiten mehrerer Anweisungen (3) zum Betrieb eines Rechners, insbesondere eines Personal Computers (PC), dadurch gekennzeichnet, daß in einem Container (1) auf dem Rechner mehrere Dokumente (2), die die Anweisungen (3) enthalten, betrieben werden, wobei die Dokumente (2) jeweils eine eigene Adresse (4) haben, die Dokumente (2) Informationen (5) über das Zusammenwirken der Dokumente (2) untereinander aufweisen und lediglich aufgrund dieser Informationen (5) von einem Dokument (2) zu einem anderen Dokument (2) verzweigt werden kann.

2. Verfahren nach Anspruch 1, dadurch gekennzeichnet, daß mehrere Dokumente (2) zu mindestens einer physikalischen Linkeinheit (6) zusammengefaßt sind, und daß die Dokumente (2) jeweils einer Linkeinheit (6) Informationen (5) über das Zusammenwirken der Dokumente (2) dieser Linkeinheit (6) untereinander aufweisen.

3. Verfahren nach Anspruch 1 oder 2, dadurch gekennzeichnet, daß der Container (1) als Browser ausgebildet ist und die Dokumente (2) browserfähig sind.

4. Verfahren nach einem der Ansprüche 1 bis 3, dadurch gekennzeichnet, daß die Kommunikation zwischen den Dokumenten (2) und dem Container (1) nach einem Component-Object-Model (COM)-Standard erfolgt.

5. Verfahren nach Anspruch 4, dadurch gekennzeichnet, daß die Kommunikation zwischen den Dokumenten (2) und dem Container (1) nach dem Hyper-Text-Markup-Language (HTML)-Standard erfolgt.

6. Verfahren nach Anspruch 5, dadurch gekennzeichnet, daß die Dokumente (2) als Seiten in dem HTML-Format vorliegen.

7. Verfahren nach Anspruch 6, dadurch gekennzeichnet, daß die Dokumente (2) als Seiten in einem ActiveX-Format vorliegen.

8. Verfahren nach einem der Ansprüche 2 bis 7, dadurch gekennzeichnet, daß innerhalb einer Linkeinheit (6) gemäß den in den Dokumenten (2) enthaltenen Informationen (5) über das Zusammenwirken der Dokumente (2) untereinander von einem Dokument (2) zu einem anderen Dokument (2) verzweigt wird.

9. Verfahren nach einem der Ansprüche 1 bis 8, dadurch gekennzeichnet, daß mehrere Container (1) in einem gemeinsamen Applikationsrahmen (7) als Multiple-Document-Interface (MDI) betrieben werden.

10. Verfahren nach Anspruch 9, dadurch gekennzeichnet, daß die Container (1) in den Applikationsrahmen (7) integriert sind.

11. Verfahren nach einem der Ansprüche 1 bis 10, dadurch gekennzeichnet, daß das Verfahren zur Programmierung und Verwaltung einer Telekommunikationsanlage eingesetzt wird.

12. Verfahren nach einem der Ansprüche 1 bis 11, dadurch gekennzeichnet, daß die Dokumente (2) in einem Computer-Netzwerk auf verschiedenen Computern unter einer bestimmten Adresse (4) abgelegt sind und daß die Container (1) zum Abarbeiten der Anweisungen (3) in diesen Dokumenten (2) über das Computer-Netzwerk auf die Dokumente (2) zugreifen.

13. Verfahren nach einem der Ansprüche 1 bis 11, dadurch gekennzeichnet, daß die Dokumente (2) in einem Intranet und/oder im Internet auf verschiedenen Computern unter einer bestimmten Adresse (4) abgelegt sind und daß der Container (1) zum Abarbeiten der Anweisungen (3) in diesen Dokumenten (2) über das Intranet bzw. das Internet auf diese Dokumente (2) zugreift.
